# EUROPEAN PATENT SPECIFICATION

(11) **EP 0 423 079 B1**
(45) Date of publication and mention of the grant of the patent: **14.12.1994**
(21) Application number: 90830432.2
(22) Date of filing: 02.10.1990
(51) Int. Cl.: B60N 2/02, A47C 7/46

(54) **A backrest having a profile variable with grid elements**
Rückenlehne mit einem durch Gitterkörper variablen Profil
Dossier pourvu d'un profil, variable au moyen d'éléments de treillis

(30) Priority: 10.10.1989 IT 6786789
(43) Date of publication of application: 17.04.1991
(73) Proprietor: FIAT AUTO S.p.A., 10135 Torino (IT)
(72) Inventor: Dal Monte, Antonio, I-00196 Roma (IT)
(74) Representative: Bosotti, Luciano

(56) References cited:
- EP-A- 0 169 293
- EP-A- 0 312 506
- FR-A- 2 554 397
- US-A- 3 948 558
- US-A- 4 040 661
- US-A- 4 696 516
- US-A- 4 798 414

## Description

The present invention relates to a backrest according to the pre-characterizing portion of the enclosed claim 1.

EP-A-0 312 506 discloses a backrest of the type indicated above, wherein an array of flexible filiform elements provided with tensioning means are located side by side within the padding for its whole length. The tensioning means enable the curvature of the flexible elements to be altered selectively so as to obtain the best adaption of the backrest to the anatomical structure of the person occupying the seat.

FR-A-2 554 392 discloses a seat for vehicles, wherein the backrest incorporates in its lumbar region a plate, whose curvature can be adjusted according to the anatomical structure of the person occupying the seat.

The object of the present invention is to provide a backrest whose vertical profile can adapt to the greater or lesser curvature of the vertebral columns of different users.

This object is achieved by a backrest of the type indicated above, furthermore including the features of the characterizing portion of the enclosed claim 1.

An advantage offered by the backrest according to the invention consists of the fact that the configuration of the lumbar region, and hence its characteristics of transverse restraint, remain unaltered whatever the condition of tensioning of the grid elements and it always provides correct support for the user's back.

A further advantage of the backrest according to the inventions consists of the fact that the device which enables the vertical profile of the front layer of the padding to be varied is mechanically very simple and does not require the use of materials with special characteristics.

Further characteristics and advantages of the present invention will become clear from the detailed description which follows with reference to the appended drawings, provided by way of non-limiting example, in which:
Figure 1 is a side elevation of a motor-vehicle seat with a backrest according to the invention,
Figure 2 is a side elevation of the seat of Figure 1 in a different operative configuration,

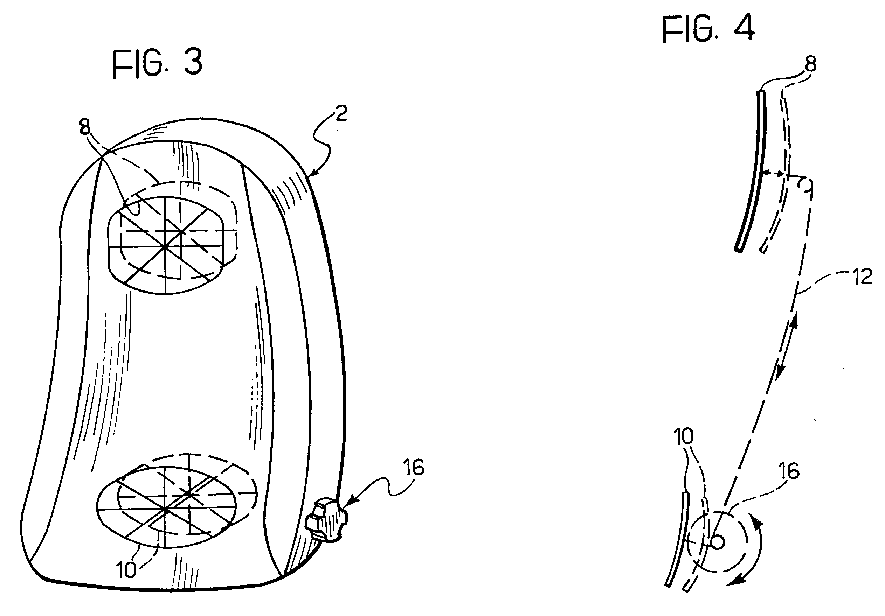

Figure 3 is a schematic perspective view of the backrest of the seat shown in the previous drawings with some details displayed, and
Figure 4 shows schematically the operation of a device of the backrest according to the invention.

With reference to the drawings, the backrest 2 of the front seat of motor-vehicle has padding 3, including a rear layer 4 of foam plastics material which provides good load-bearing characteristics, and has a front profile which follows the physiological curvature of the vertebral column of a human being. The padding 3 also includes a front layer 6 of foam plastics material which is more yielding and softer than the first layer 4. Just beneath the surface of the front layer 6, in correspondence with the dorsal and sacral regions respectively, the padding 3 incorporates grid elements 8, 10 of metal or plastics material which can be tensioned by means of cables 12 each connected at one end to a grid element 8, 10 and at the other end to the shank 14 of a knob 16 provided on the side of the backrest 2.

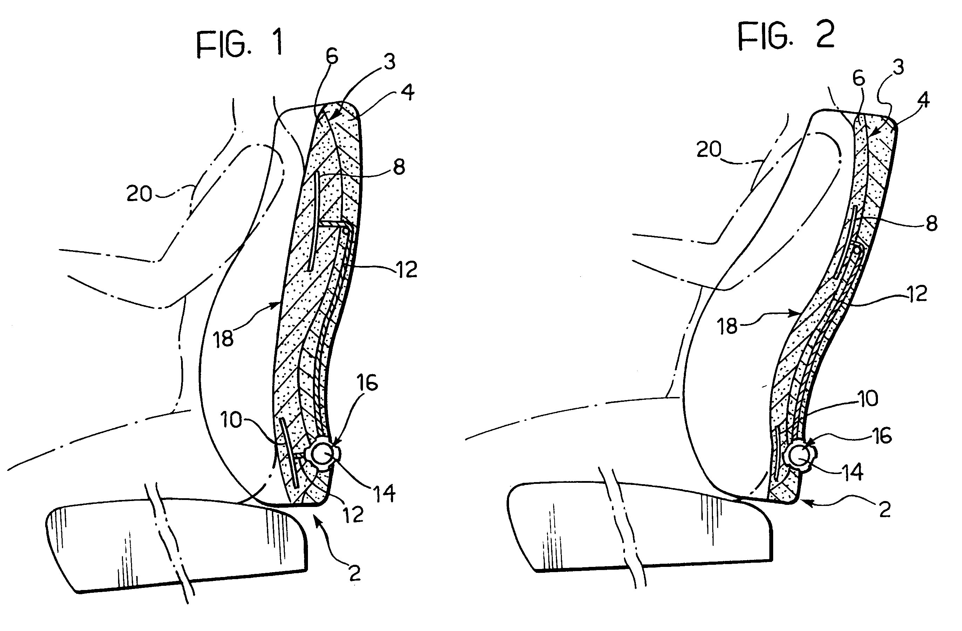

When the grid elements 8, 10 are in their rest conditions, the front layer 6 of the padding 3 assumes a slightly curved vertical profile 18 (Figure 1). When the knob 16 is rotated, the cables 12 are wound on to the shank 14, tensioning the grid elements 8, 10. The front layer 6 of the padding 3 is thus squashed against the rear layer 4 and its front vertical profile 18 assumes an undulate configuration (Figure 2).

The back and glutei of a person 20, whose vertebral column is characterised, for example, by pronounced dorsal kyphosis or lumbar lordosis, can thus be housed in the undulations formed.

Whatever the configuration of the backrest 2, however, the configuration of the lumbar region remains unchanged and, by means of its wrap-around transverse form, always provides correct support for the back of the user 20.

It is clear from the above description that, since the grid elements 8, 10 need compress only the soft layer 6 of the padding 3, the cables 12 and the operating knob 16 are not under great mechanical stress and can therefore be made from ordinary, cheap plastics materials without fear of their breakage or premature wear.

## Claims

1. A backrest (2), particularly for a motor vehicle seat, including a padding (3) which incorporates elements (8, 10) provided with tensioning means (12, 16), the front region of the padding (3) assuming a slightly curved profile (18) when the tensioning means (12, 16) are in a rest condition and an undulate vertical profile (18) when the actuation of the said means (12, 16) tensions the grid elements (8, 10), characterised in that the padding (3) is constituted by at least a rear layer (4) and a front layer (6) of foam plastics material, the front layer (6) being softer than the rear layer (4), and in that the elements (8, 10) are grid elements (8, 10) incorporated in the front layer (6) of the padding (3) only in correspondence of the dorsal region and the sacral region.

2. A backrest (2) according to Claim 1, characterised in that the grid elements (8, 10) are of plastics material.

3. A backrest (2) according to Claim 1, characterised in that the grid elements (8, 10) are of metal.

4. A backrest (2) according to any one of the preceding claims, characterised in that the tensioning means (12, 16) comprise a cable (12) connected at one end to the grid element (8, 10) and at the opposite end to the shank (14) of a knob (16), the rotation of the knob (16) causing the cable (12) to be wound on to the shank (14) and the grid element (8, 10) to be tensioned.

## Patentansprüche

1. Rückenlehne (2), insbesondere für einen Kraftfahrzeugsitz, mit einer Polsterung (3), welche Spannmittel (12, 16) aufweisende Elemente (8, 10) umfaßt, wobei der vordere Bereich der Polsterung (3) ein leicht gekrümmtes Profil (18) annimmt, wenn die Spannmittel (12, 16) in einem Ruhezustand sind, und ein gewelltes Vertikalprofil (18), wenn die Betätigung der Mittel (12, 16) die Gitterelemente (8, 10) spannt, dadurch gekennzeichnet, daß die Polsterung (3) von wenigstens einer hinteren Schicht (4) und einer vorderen Schicht (6) aus Schaumstoffmaterial gebildet ist, wobei die vordere Schicht (6) weicher ist als die hintere Schicht (4), und daß die Elemente (8, 10) Gitterelemente (8, 10) sind, welche in der vorderen Schicht (6) der Polsterung (3) lediglich in Zuordnung zu dem Dorsalbereich und dem Kreuzbeinbereich angeordnet sind.

2. Rückenlehne (2) nach Anspruch 1, dadurch gekennzeichnet, daß die Gitterelemente (8, 10) aus Kunststoffmaterial sind.

3. Rückenlehne (2) nach Anspruch 1, dadurch gekennzeichnet, daß die Gitterelemente (8, 10) aus Metall sind.

4. Rückenlehne (2) nach einem der vorhergehenden Ansprüche, dadurch gekennzeichnet, daß die Spannmittel (12, 16) ein Seil (12) umfassen, welches an einem Ende mit dem Gitterelement (8, 10) und an dem entgegengesetzten Ende mit der Welle (14) eines Griffs (16) verbunden ist, wobei die Drehung des Griffs (16) ein Aufwickeln des Seils (12) auf der Welle und ein Spannen des Gitterelements (8, 10) bewirkt.

## Revendications

1. Dossier (2), en particulier pour siège de véhicule automobile, comprenant un rembourrage (3) qui comprend lui-même des éléments (8, 10) munis d'éléments de tension (12, 16), la région avant du rembourrage (3) prenant un profil légèrement incurvé (18) lorsque les moyens de tension (12, 16) sont à l'état de repos, et un profil vertical ondulé (18) lorsque l'actionnement desdits moyens (12, 16) tend les éléments grilles (8, 10), caractérisé en ce que le rembourrage (3) est constitué par au moins une couche arrière (4) et une couche avant (6) de mousse de matière plastique, la couche avant (6) étant plus molle que la couche arrière (4) et en ce que les éléments (8, 10) sont des éléments grilles (8, 10) incorporés dans la couche avant (6) du rembourrage (3) uniquement au droit de la région dorsale et de la région sacrée.

2. Dossier (2) selon la revendication 1, caractérisé en ce que les éléments grilles (8, 10) sont en matière plastique.

3. Dossier (2) selon la revendication 1, caractérisé en ce que les éléments grilles (8, 10) sont métalliques.

4. Dossier (2) selon une quelconque des revendications précédentes, caractérisé en ce que les moyens de tension (12, 16) comprennent un câble (12) relié aux éléments grilles (8, 10) à une première extrémité, tandis qu'à l'autre extrémité, il est relié à la tige (14) d'un bouton (16), la rotation du bouton (16) provoquant l'enroulement du câble (12) sur la tige (14) et la tension de l'élément de grille (8, 10).
